## Europäisches Patentamt

## European Patent Office

## Office européen des brevets

(11) Publication number: **0 072 241**
**B1**

(12) **EUROPEAN PATENT SPECIFICATION**

(45) Date of publication of patent specification: **13.08.86**

(51) Int. Cl.⁴: **H 04 L 27/22**

(21) Application number: **82304203.1**

(22) Date of filing: **10.08.82**

(54) Carrier recovery circuit.

(30) Priority: 10.08.81 JP 124872/81
22.09.81 JP 149961/81

(43) Date of publication of application:
16.02.83 Bulletin 83/07

(45) Publication of the grant of the patent:
13.08.86 Bulletin 86/33

(84) Designated Contracting States:
DE FR GB NL

(56) References cited:
DE-A-2 800 242
US-A-4 143 322

FUJITSU, vol. 11, no. 4, December 1975, pages
57-80, Kawasaki, JP T. YAMASHITA et al.:
"Synchronous phase demodulators for high
speed quadrature PSK transmission systems"
IEEE TRANSACTIONS ON COMMUNICATIONS,
vol. COM-25, no. 12, December 1977, pages
1453-1459, New York, US C.R. CAHN:
"Improving frequency acquisition of a costas
loop"

PATENTS ABSTRACTS OF JAPAN, page 6383 E
77

PATENTS ABSTRACTS OF JAPAN, vol. 5, no.
159 (E-77)831r, 14th October 1981

(73) Proprietor: FUJITSU LIMITED
1015, Kamikodanaka Nakahara-ku
Kawasaki-shi Kanagawa 211 (JP)

(72) Inventor: Sasaki, Susumu
8-17, Fujigaya 1-chome
Kugenuma Fujisawa-shi Kanagawa 251 (JP)
Inventor: Homan, Hiroyuki
2-100, Kosugi Goten-cho Nakahara-ku
Kawasaki-shi Kanagawa 211 (JP)

(74) Representative: Sunderland, James Harry et al
HASELTINE LAKE & CO Hazlitt House 28
Southampton Buildings Chancery Lane
London WC2A 1AT (GB)

Courier Press, Leamington Spa, England.

## Description

The present invention relates to a carrier recovery circuit for use in a demodulator for a $2^n$-phase $(n=1, 2,...)$ phase-shift keying (PSK) modulated signal.

In general, a carrier recovery circuit is provided in a demodulator of a receiver for $2^n$-phase PSK modulated signals. Such carrier recovery circuits are already known. For example, in a carrier recovery circuit according to the IF (intermediate frequency) multiplying system, four-phase PSK modulated signals are multiplied by four so as to obtain non-modulated signals, and after that, the non-modulated signals are demultiplied by four so as to carrier-recover in phase synchronization with the received PSK signals. In a carrier recovery circuit according to the remodulation system, the received PSK modulated signals are again modulated (remodulated) using demodulated output signals. In a carrier recovery circuit according to the baseband processing system, a Costas loop is used.

In the baseband processing system, since carrier-waves are recovered directly from the received PSK modulated signals, a phase-locked loop (PLL) circuit is basically provided. This PLL circuit is preferably locked in to the frequency of the carrier waves; however, this PLL circuit may also be locked in to false lock-in frequencies:

$$f_0 \pm f_c/N, \quad f_0 \pm 2f_c/N,...$$

where $f_0$ is the frequency of the carrier waves, $f_c$ is a clock frequency, and $N=2^n$. In particular, such a false lock-in phenomenon often occurs in the case of a small-capacity digital communication where the ratio of the clock frequency $(f_c)$ to the carrier wave frequency $(f_0)$ is small.

In order to avoid the above-mentioned false lock-in phenomenon, it has been known to use a highly stable voltage-controlled crystal oscillator in the PLL circuit. However, the use of such a crystal oscillator in a carrier recovery circuit is costly, and, in addition, the normal lock-in range for the carrier wave frequency is small.

In order to enlarge the normal lock-in range for PSK modulated signals, it has also been known to add a highly stable crystal oscillator and a sweep circuit to the PLL circuit. In a carrier recovery circuit using a highly stable crystal oscillator and a sweep circuit, the false-lock-in phenomenon is detected by obtaining the frequency difference between the voltage-controlled oscillator of the PLL circuit and the highly stable crystal oscillator. That is, when the frequency difference is larger than a predetermined value, the sweep circuit sweeps the control voltage of the voltage-controlled oscillator so that the PLL circuit is freed from the false-lock-in range and again performs the lock-in operation for the carrier waves. However, even when the PLL circuit is freed from one false-lock-in range, the PLL circuit may be again locked in to another false-lock-in range. Therefore, in order to enlarge the lock-in range for the PSK modulated signals, the design of the sweep circuit, including the sweep frequency, and the sweep amplitude must be carefully determined.

In order to enlarge the normal lock-in range for PSK modulated signals, it has been further known to add a simple automatic frequency control (AFC) circuit to the PLL circuit. In a carrier recovery circuit using an AFC circuit, either a sine-wave signal or a cosine-wave signal obtained in the PLL circuit is differentiated and, after that, the differentiated signal is supplied to the cosine-wave signal or the sine-wave signal to obtain the frequency difference between the received PSK modulated signal and the output signal of the voltage-controlled oscillator. This frequency difference serves as a control voltage for the voltage-controlled oscillator. Therefore, even if the PLL circuit is locked in a false-lock-in range it can be freed from that range by AFC. Thus, enlargement of the normal lock-in range for the carrier waves is economically realised. However, in this recovery circuit, spurious signals are generated due to the asymmetry of the AFC circuit, thereby causing the normal lock-in operation to be unstable.

According to the present invention, there is provided a carrier recovery circuit for use in a demodulator for a $2^n$-phase $(n=1, 2,...)$ PSK modulated signal comprising: voltage-controlled oscillator means for generating first and second signals in phase quadrature; first and second mixing means for mixing the PSK modulated signal with the first and second signals, respectively; baseband processing means for multiplying the output signals of the first and second mixing means by a factor of $2^n$ to generate third and fourth signals in phase quadrature; first and second differentiating means for differentiating the third and fourth signals; a third mixing means for mixing the output signal of the first differentiating means with the fourth signal; a fourth mixing means for mixing the output signal of the second differentiating means with the third signal; means for generating the difference between the output signals of the third and fourth mixing means; a first control means for supplying a first control voltage indicative of the third or fourth signal to the voltage-controlled oscillator means; and a second control means for supplying a second control voltage indicative of the output signal of the difference-generating means to the voltage-controlled oscillator means.

Embodiments of the present invention can provide carrier-wave regeneration circuits using AFC circuits which enable a normal lock-in operation to be stable.

Reference is made, by way of example, to the accompanying drawings, in which:—

Figure 1 is a block circuit diagram illustrating a first prior art carrier recovery circuit;

Figure 2 is a block circuit diagram illustrating a second prior art carrier recovery circuit;

Figure 3 is a block circuit diagram illustrating a third carrier recovery circuit;

Figure 4 is a block circuit diagram illustrating a carrier recovery circuit according to one embodiment of the present invention;

Figure 5 is a graph showing the relationship between a frequency difference $\omega_d$ and a control voltage $V_{AFC}$ provided in the circuit of Figure 4;

Figure 6 is a circuit diagram of voltage-controlled oscillator 7 of the circuit of Figure 4;

Figure 7 is a circuit diagram of baseband processing circuit 4 of the circuit of Figure 4;

Figure 8 is a block circuit diagram illustrating a carrier recovery circuit according to another embodiment of the present invention;

Figure 9 is a graph for assistance in understanding the determination of threshold values $V_{10}$ and $V_{20}$ employed in the circuit of Figure 8;

Figure 10 is a detailed circuit diagram of a determination circuit 28 and an isolated-pulse generator 29 of the circuit of Figure 8;

Figures 11A, 11B, 11C, 12A, 12B, and 12C are timing diagrams showing signals appearing in the circuit of Figure 10.

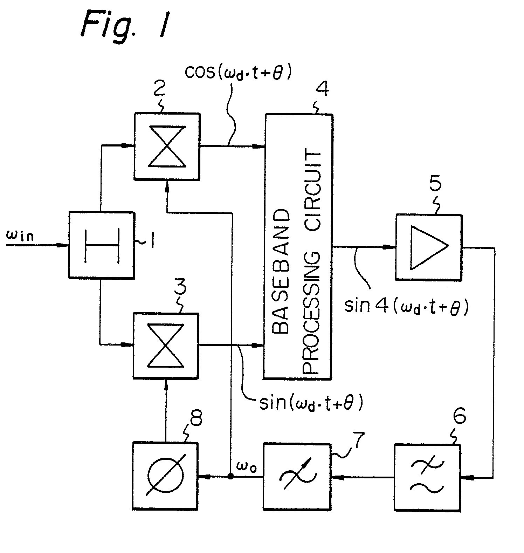

In Figure 1, which illustrates a first prior art carrier recovery circuit, a PLL circuit is constituted by hybrid (circuit) 1, phase detectors or mixer circuits 2 and 3, Costas loop-type baseband processing circuit 4, amplifier 5, low pass filter 6, voltage-controlled oscillator 7, and 90° phase shifter 8. A received four-phase PSK modulated input signal having frequency $\omega_{in}$ passes through hybrid 1 to mixer circuits 2 and 3 which generate output signals $\cos(\omega_d . t+\theta)$ and $\sin(\omega_d . t+\theta)$ in phase quadrature, where $\omega_d$ and $\theta$ are differences in frequency and phase, respectively, between the input signal ($\omega_{in}$) and the output signal ($\omega_0$) of voltage-controlled oscillator 7. Baseband processing circuit 4 generates output $\sin4(\omega_d . t+\theta)$. Thus, voltage-controlled oscillator 7 is controlled by voltage $\sin4(\omega_d . t+\theta)$ so as to generate carrier waves. If the PLL circuit is locked in for the carrier waves, $\omega_d=0$ and $\theta=0$, that is, $\sin4(\omega_d . t+\theta)=0$. However, when enlarging the lock-in range for the carrier waves, a false-lock-in phenomenon often occurs. In this case, $\sin4(\omega_d . t+\theta)=0$ but $\omega_d\neq0$. In order to avoid this false-lock-in phenomenen, it has been proposed to use highly stable crystal oscillator as voltage-controlled oscillator 7. Such use, however, makes the circuit costly and the normal lock-in range small.

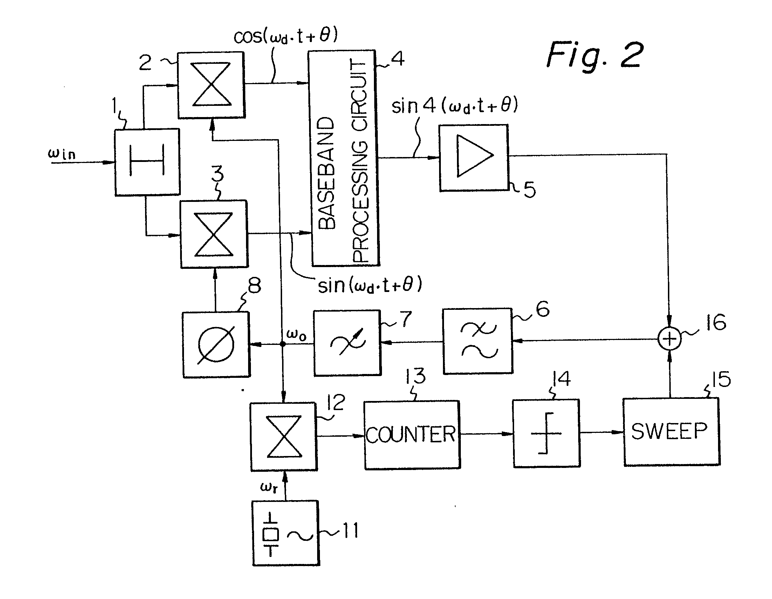

In Figure 2, which illustrates a second prior art carrier recovery circuit, elements 11 through 16 are added to the elements of the circuit of Figure 1. Reference numeral 11 designates a highly stable crystal oscillator having frequency $\omega_r$, 12 a mixer circuit, 13 a counter, 14 a determination circuit, 15 a sweep circuit, and 16 a sum circuit. The difference in frequency between voltage-controlled oscillator 7 and crystal oscillator 11 is counted by counter 13. When the frequency difference is larger than a predetermined value, determination circuit 14 initiates the operation of sweep circuit 15 so that the sweep voltage is added to the control voltage of voltage-controlled oscillator 7, thereby sweeping the oscillating frequency thereof. As a result, the PLL circuit is freed from a false-lock-in range and again performs the normal lock-in operation for the carrier waves. In the circuit of Figure 2, however, even if the PLL circuit is freed from one false-lock-in state, the circuit may also be locked in another false-lock-in state. Therefore, in order to enlarge the normal lock-in range for the carrier waves, the sweep frequency, the sweep amplitude, and the like must be carefully designed. As a result, it is not easy to manufacture and adjust the circuit of Figure 2.

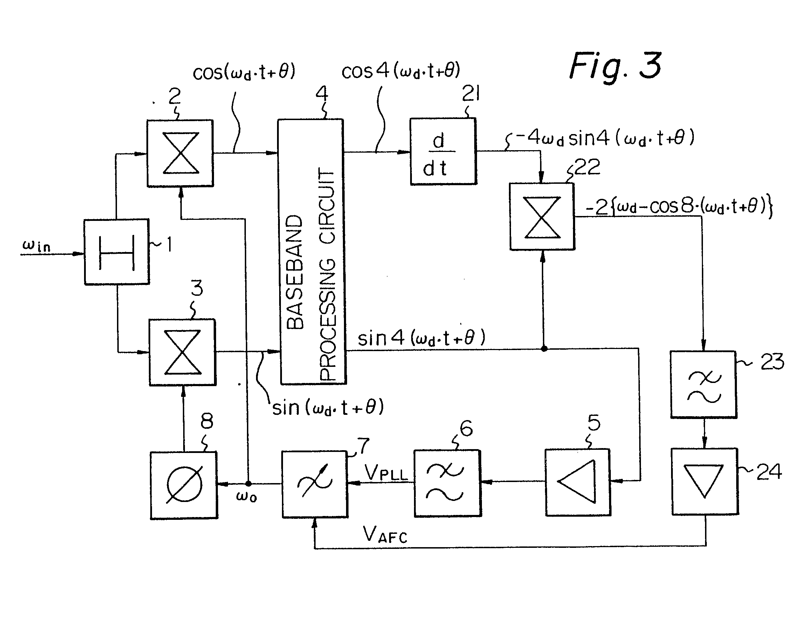

In Figure 3, which illustrates a third carrier recovery circuit, as described in JP—A 56—154859, published 30.11.1981, elements 21 through 24 are provided to form an AFC loop. In Figure 3 elements 1 to 8 correspond to elements 1 to 8 of Figure 1. However it should be noted that in Figure 3, baseband processing circuit 4 delivers two outputs; $\sin4(\omega_d . t+\theta)$ and $\cos4(\omega_d . t+\theta)$. Reference numeral 21 designates a differentiating circuit, 22 a mixer circuit, 23 a low pass filter, and 24 an amplifier. Differentiating circuit 21 generates the output

$$\frac{d}{dt}\cos4(\omega_d . t+\theta)$$

$$= -4\omega_d\sin4(\omega_d . t+\theta)$$

Therefore, mixer circuit 22 generates the output

$$-4\omega_d\sin^2(\omega_d . t+\theta)$$

$$= -2\{\omega_d-\cos8(\omega_d . t+\theta)\}$$

That is, frequency difference $-2\omega_d$ is supplied through low pass filter 23 and amplifier 24 to voltage-controlled oscillator 7 to perform AFC. Thus, voltage-controlled oscillator 7 is controlled by first control voltage $V_{PLL}$ due to the phase-locked loop and by second control voltage $V_{AFC}$ due to the AFC loop. As a result, even if the PLL circuit becomes locked in a false-lock-in range, the PLL circuit is freed from the false-lock-in range by AFC and is moved toward the center of the normal lock-in range for the carrier waves.

In the circuit of Fig. 3, however, there is a serious problem in that the AFC is unsuitable due to the AFC circuit being asymmetrical, with the result that control voltage $V_{AFC}$ is relatively noisy in spite of the presence of low pass filter 23, which eliminates the frequency component of a signal passing therethrough. Note that usually differentiating circuit 21 creates a large amount of noise.

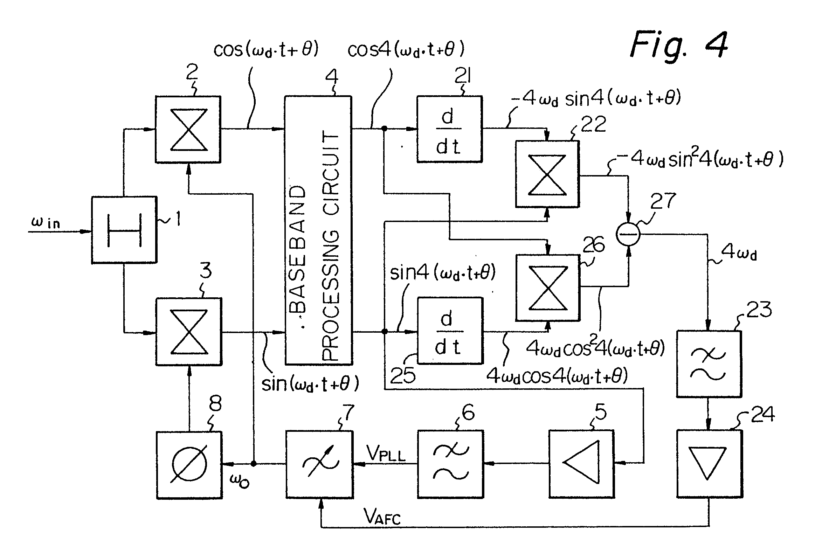

In Figure 4 which illustrates one embodiment of the present invention, a symmetrical AFC circuit is provided so that a stable AFC operation is performed. That is, differentiating circuit 25, mixer circuit 26, and difference circuit 27 are added to the elements of Figure 3.

As explained above, mixer circuits 2 and 3 generate outputs $\cos(\omega_d . t+\theta)$ and $\sin(\omega_d . t+\theta)$ in phase quadrature which are supplied to baseband processing circuit 4, which, in turn, generates first and second outputs $\cos4(\omega_d . t+\theta)$ and

$\sin 4(\omega_d . t + \theta)$ in phase quadrature. Sine-wave component $\sin 4(\omega_d . t + \theta)$ is supplied to the PLL while both of the cosine-wave and sine-wave components are supplied to the AFC loop. It will be appreciated that it is alternatively possible to supply the cosine-wave component to the PLL.

Differentiating circuits 21 and 25 differentiate outputs $\cos 4(\omega_d . t + \theta)$ and $\sin 4(\omega_d . t + \theta)$, respectively, of baseband processing circuit 4 and generate the following differentiating outputs:

$$\frac{d}{dt}\{\cos 4(\omega_d . t + \theta)\}$$

$$= -d\omega_d \sin 4(\omega_d . t + \theta)$$

$$\frac{d}{dt}\{\sin 4(\omega_d . t + \theta)\}$$

$$= -\omega_d \cos 4(\omega_d . t + \theta)$$

Mixer circuit 22 mixes the output of differentiating circuit 21 with the second output of baseband processing circuit 4 while mixer circuit 26 mixes the output of differentiating circuit 25 with the first output of baseband processing circuit 4. Therefore, the outputs of mixer circuits 22 and 26 are as follows:

$$-4\omega_d \sin^2 4(\omega_d . t + \theta) \text{ and}$$

$$4\omega_d \cos^2 4(\omega_d . t + \theta).$$

Difference circuit 27 generates the difference between the outputs of mixer circuits 22 and 26, that is, $4\omega_d$. A circuit corresponding to elements 21, 25, 22, 26 and 27 is in itself known from DE—A—2 800 242. The output of difference circuit 27 is supplied through low pass filter 23 and amplifier 24 to voltage-controlled oscillator 7 as control voltage $V_{AFC}$. Therefore, when frequency difference $\omega_d$ between the received PSK input signal and the output of voltage-controlled oscillator 7 locked in a false-lock-in state is detected, voltage-controlled oscillator 7 is controlled so that frequency difference $\omega_d$ becomes zero. Thus, an AFC loop is produced so as to avoid the false-lock-in phenomenon.

Output $\sin 4(\omega_d . t + \theta)$ of baseband processing circuit 4 is supplied through amplifier 5 and low pass filter 6 to voltage-controlled oscillator 7 as control voltage $V_{PLL}$. If frequency difference $\omega_d$ equals zero, control voltage $V_{PLL}$ is a value corresponding to the difference in phase between the received PSK modulated input signal and the output of voltage-controlled oscillator 7 so that a PLL is produced. Accordingly, carrier waves are recovered from the output of voltage-controlled oscillator 7 in synchronization with the phase of the received input signals.

It should be noted that, in a PLL, if frequency difference $\omega_d$ is not zero, $V_{PLL}$ is in general not zero either. Therefore, a PLL also serves as another AFC loop.

In Figure 4, even when the outputs of differentiating circuits 21 and 25 include undesired noise, such undesired noise is excluded by difference circuit 27. In addition, the high frequency component of the output of difference circuit 27 is excluded by low pass filter 23. Thus, control voltage $V_{AFC}$ of Figure 4 is more stable than control voltage $V_{AFC}$ of Figure 3.

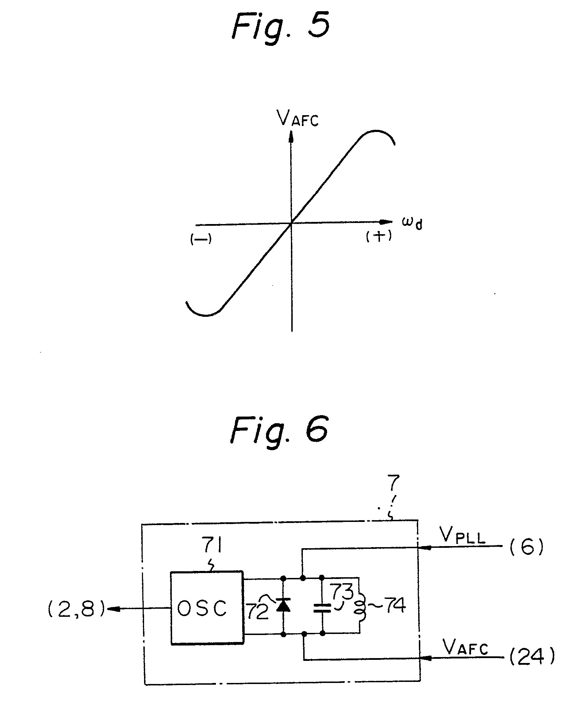

Figure 5 is a graph showing the relationship between frequency difference $\omega_d$ and control voltage $V_{AFC}$ of voltage-controlled oscillator 7 of Figure 4. As mentioned above, control voltage $V_{AFC}$ given by the output of difference circuit 27 controls voltage-controlled oscillator 7 so that frequency difference $\omega_d$ becomes zero.

In Figure 6, which is a circuit diagram of voltage-controlled oscillator 7 of Figure 4, reference numeral 71 designates an oscillating circuit, 72 a variable capacitance diode, 73 a capacitor, and 74 an inductance. The combination of variable capacitor 72, capacitor 73, and inductance 74 determines the oscillating frequency of oscillating circuit 71. In this case, the oscillating frequency varies in response to the voltage supplied to variable capacitance diode 72, which voltage is determined by first control voltage $V_{PLL}$ and second control voltage $V_{AFC}$. First control voltage $V_{PLL}$ has a polarity responsive to the positive or negative value of phase difference $\theta$ while second control voltage $V_{AFC}$ has a positive or negative polarity responsive to frequency difference $\omega_d$. Two kinds of control voltages $V_{PLL}$ and $V_{AFC}$ are superposed on variable capacitance diode 72 so as to lessen both frequency difference $\omega_d$ and phase difference $\theta$.

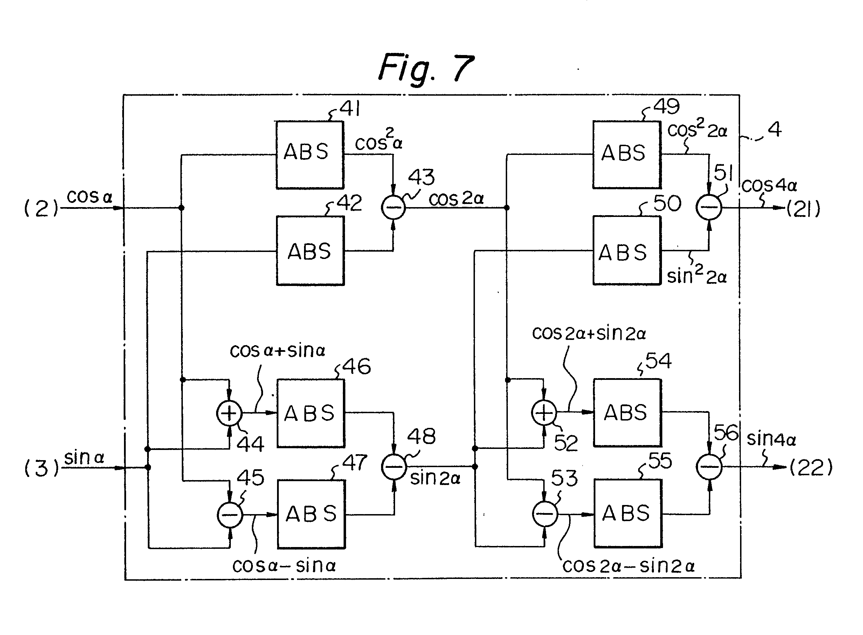

In Figure 7, which is a block circuit diagram of baseband processing circuit 4 of Figure 4, reference numerals 41, 42, 46, 47, 49, 50, 54, and 55 designate absolute value circuits, 43, 45, 48, 51, 53, and 56 designate difference circuits, and 44 and 52 designate sum circuits. Here it is assumed that $\alpha = \omega_d . t + \theta$.

Circuits 41, 42, and 43 are used for generating output $\cos 2\alpha$. That is, absolute value circuits 41 and 42 generate outputs $\cos^2\alpha$ and $\sin^2\alpha$, respectively, and difference circuit 43 generates output $\cos^2\alpha - \sin^2\alpha = \cos 2\alpha$.

Circuits 44 through 48 are used for generating output $\sin 2\alpha$. That is, sum circuit 44 generates output $\cos\alpha + \sin\alpha$, and, therefore, absolute value circuit 46 generates output $(\cos\alpha + \sin\alpha)^2$. In addition, difference circuit 45 generates output $\cos\alpha - \sin\alpha$, and, therefore absolute value circuit 47 generates output $(\cos\alpha - \sin\alpha)^2$. Difference circuit 48 generates output

$$(\cos\alpha + \sin\alpha)^2 - (\cos\alpha - \sin\alpha)^2$$
$$= 4\cos\alpha\sin\alpha$$
$$= 2\sin 2\alpha$$
$$\cong \sin 2\alpha \text{ (after amplitude adjusting)}$$

Similarly, circuits 49 through 51, which are the same as circuits 41 and 43 are used for generating

output cos4α, while circuits 52 through 56, which are the same as circuits 44 through 48, respectively, are used for generating output sin4α.

Thus, signals cosα and sinα are changed to signals cos4α and sin4α by baseband processing circuit 4 of Figure 4.

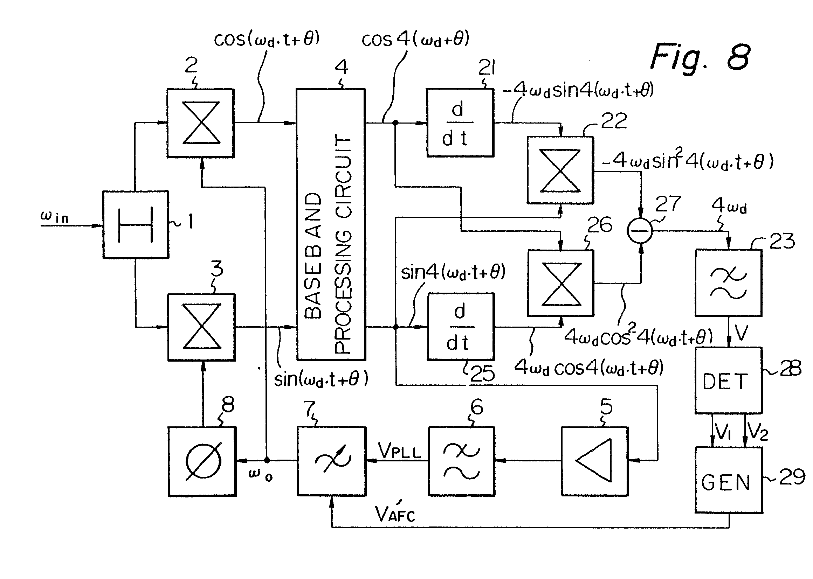

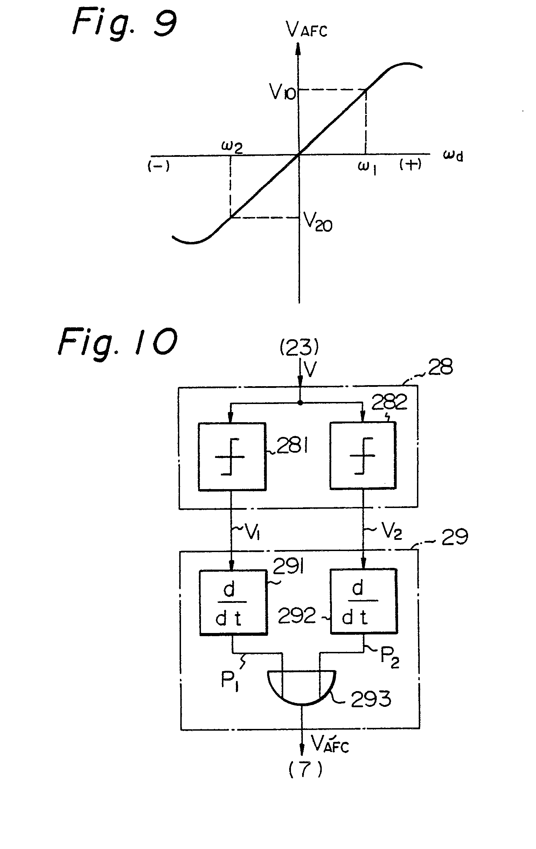

In Figure 8, which illustrates another embodiment of the present invention, determination circuit 28 and isolated-pulse generator 29 are employed in place of element 24 of Figure 4. Determination circuit 28 determines whether output level V of low pass filter 23 is within a predetermined range having maximum level $V_{10}$ and minimum level $V_{20}$ as shown in Figure 9.

Note that the curve in Figure 9 is the same as the curve of Figure 5. In Figure 9, $\omega_1$ and $\omega_2$ show false-lock-in frequencies, and $V_{10}$ and $V_{20}$ are output voltages of filter 23 when frequency difference $\omega_d$ is $\omega_1$ and $\omega_2$, respectively. Such values $V_{10}$ and $V_{20}$ are threshold values of determination circuit 28 (Figure 8).

Returning to Figure 8, determination circuit 28 compares the output V of low pass filter 23 with high threshold value $V_{10}$ to generate digital output $V_1$, and, simultaneously, determination circuit 28 compares the output of low pass filter 23 with low threshold value $V_{20}$ to generate digital output $V_2$.

When isolated-pulse generator 29 detects the rising of output $V_1$ of determination circuit 28, generator 29 generates a positive isolated pulse. On the other hand, when isolated-pulse generator 29 detects the falling of output $V_2$ of determination circuit 28, generator 29 generates a negative isolated pulse. Such a positive or negative isolated pulse is supplied to voltage-controlled oscillator 7 as control voltage $V'_{AFC}$. This means that an AFC loop is produced so as to avoid the false lock-in phenomenon.

In Figure 10, which is a detailed circuit diagram of determination circuit 28 and isolated-pulse generator 29 of Figure 8, determination circuit 28 comprises comparators 281 and 282 which compare output V of low pass filter 23 with threshold values $V_{10}$ and $V_{20}$, respectively. Isolated-pulse generator 29 comprises rising-detection circuit (differentiating circuit) 291, falling-detection circuit (differentiating circuit) 292, or OR circuit 293.

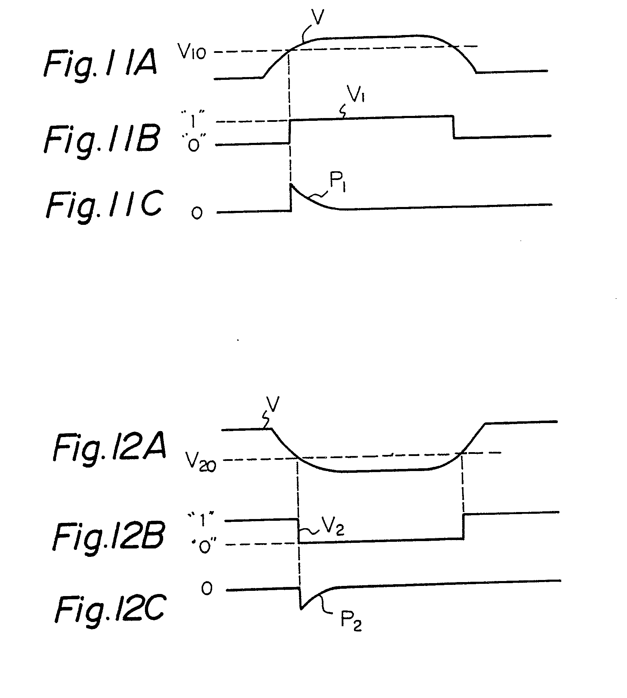

The waveforms of the signals in Figure 10 are illustrated in Figures 11A, 11B, and 11C and Figures 12A, 12B, and 12C. When output V of low pass filter 23 becomes higher than threshold value $V_{10}$, as illustrated in Figure 11A, comparator circuit 281 pulls up its output $V_1$, as illustrated in Figure 11B, so that isolated-pulse generator 29 generates positive isolated pulse $P_1$, as illustrated in Figure 11C. Similarly, when output V of low pass filter 23 beomes lower than threshold value $V_{20}$, as illustrated in Figure 12A, comparator circuit 282 pulls up its output $V_2$, as illustrated in Figure 12B, so that isolated-pulse generator 29 generates negative isolated pulse $P_2$, as illustrated in Figure 12C.

Thus, in the second embodiment, when the output of low pass filter 23 corresponding to frequency difference $\omega_d$ exceeds false-lock-in frequency $\omega_1$ or $\omega_2$, a positive or negative isolated pulse is supplied to voltage-controlled oscillator 7, thereby reducing the time period required for freeing the PLL circuit from the false-lock-in range. Note that, in this case, separating of the PLL circuit from the false-lock-in range is also always carried out by a PLL.

The above-mentioned embodiments are related to four-phase modulated waves; however, the present invention can be applied in the recovery of multi-phase modulated carrier waves such as eight-phase waves, sixteen-phase waves, and the like.

As explained hereinbefore, according to the present invention, since stable AFC is carried out for the recovery of carrier waves, a normal lock-in operation for carrier waves is carried out at a high speed. In addition, the normal lock-in range can be enlarged.

According to the present invention there is provided a carrier recovery circuit for use in a demodulator for a $2^n$-phase (n=1,2,...) PSK modulated signal comprising:

voltage-controlled oscillator means for generating first and second signals in phase quadrature;

first and second mixing means for mixing said PSK modulated signal with said first and second signals, respectively;

baseband processing means for multiplying the output signals of said first and second mixing means by a factor of $2^n$ to generate third and fourth signals in phase quadrature;

differentiating means for differentiating said third signal;

a third mixing means for mixing the output signal of said differentiating means with said fourth signal; and

a first control means for supplying a first control voltage indicative of a signal generated by said baseband processing means to said voltage-controlled oscillator means; and

a second control means for supplying a second control voltage derived in dependence upon the output signal of the third mixing means to said voltage-controlled oscillator means;

wherein the carrier recovery circuit further comprises:

further differentiating means for differentiating the fourth signal;

a fourth mixing means for mixing the output signal of said further differentiating means with said third signal; and

means for generating the difference between the output signals of said third and fourth mixing means;

and wherein the first control voltage is indicative of either said third or said fourth signal, and the second control voltage supplied by the second control means is indicative of the output signal of said difference-generating means.

**Claims**

1. A carrier recovery circuit, for use in a demodulator for a $2^n$-phase (n=1,2,...) PSK modulated signal, comprising:

voltage-controlled oscillator means (7, 8) for generating first and second signals in phase quadrature;

first and second mixing means (2, 3) for mixing said PSK modulated signal with said first and second signals, respectively;

baseband processing means (4) for multiplying the output signals of said first and second mixing means by a factor of $2^n$ to generate third and fourth signals in phase quadrature;

first and second differentiating means (21, 25) for differentiating said third and fourth signals;

a third mixing means (22) for mixing the output signal of said first differentiating means with said fourth signal;

a fourth mixing means (26) for mixing the output signal of said second differentiating means and said third signal;

difference-generating means (27) for generating the difference between the output signals of said third and fourth mixing means;

a first control means (5, 6) for supplying a first control voltage ($V_{PLL}$) indicative of said third or fourth signal to said voltage-controlled oscillator means; and

a second control means (23, 24; 23, 28, 29) for supplying a second control voltage ($V_{AFC}$, $V_{AFC}'$) indicative of the output signal of said difference-generating means to said voltage-controlled oscillator means.

2. A circuit as set forth in claim 1, wherein said voltage-controlled oscillator means comprises:

a voltage-controlled oscillator (7) for generating said first signal; and

a 90° phase shifter (8) connected to the output of said voltage-controlled oscillator for generating said second signal.

3. A circuit as set forth in claim 1 or 2, wherein said first control means comprises:

an amplifier (5) for receiving said third or fourth signal; and

a low pass filter (6), connected to the output of said amplifier, for generating said first control voltage ($V_{PLL}$).

4. A circuit as set forth in claim 1, 2 or 3, wherein said second control means comprises:

a low pass filter (23) for receiving the output signal of said difference-generating means; and

an amplifier (24), connected to said low pass filter, for generating said second control voltage ($V_{AFC}$).

5. A circuit as set forth in claim 1, 2 or 3, wherein said second control means comprises:

a low pass filter (23) for receiving the output signal of said difference-generating means;

a determination circuit (28), connected to said low pass filter, for determining whether or not the output level of said low pass filter is within a predetermined range;

an isolated-pulse generator (29), connected to said determination circuit, for generating an isolated pulse when the output level of said low pass filter deviates from said predetermined range, said isolated pulse serving as said second control voltage ($V_{AFC}'$).

6. A circuit as set forth in claim 5, wherein said isolated pulse has a polarity which depends upon whether the output level of said low pass filter deviates from the said predetermined range by exceeding the upper level of said predetermined range or by falling below the lower level of said predetermined range.

**Patentansprüche**

1. Schaltung zur Rückgewinnung einer Trägerwelle, zur Verwendung in einem Demodulator für ein $2^n$-phasen- (n=1,2,...) PSK-moduliertes Signal, mit:

einer spannungsgesteuerten Oszillatorschaltung (7, 8) zur Erzeugung von ersten und zweiten Signalen in Phasenquadratur;

ersten und zweiten Mischeinrichtungen (2, 3) zum Mischen des genannten PSK-modulierten Signals mit den genannten ersten bzw. zweiten Signalen;

einer Basisbandverarbeitungseinrichtung (4) zur Vervielfachung der Ausgangssignale der genannten ersten und zweiten Mischeinrichtungen um einen Faktor $2^n$, um dritte und vierte Signale in Phasenquadratur zu erzeugen;

ersten und zweiten Differenziereinrichtungen (21, 25) zum Differenzieren der dritten und vierten Signale;

einer dritten Mischeinrichtung (22) zum Mischen des Ausgangssignals der genannten ersten Differenziereinrichtung mit dem genannten vierten Signal,

einer vierten Mischeinrichtung (26) zum Mischen des Ausgangssignals der genannten zweiten Differenziereinrichtung mit dem genannten dritten Signal;

Differenzerzeugungseinrichtungen (27) zur Erzeugung der Differenz zwischen den Ausgangssignalen der genannten dritten und vierten Mischeinrichtungen;

einer ersten Steuereinrichtung (5, 6) zur Lieferung einer ersten Steuerspannung ($V_{PLL}$), welche das dritte oder vierte Signal anzeigt, zu der spannungsgesteuerten Oszillatoreinrichtung; und

einer zweiten Steuereinrichtung (23, 24; 23, 28, 29) zur Lieferung einer zweiten Steuerspannung ($V_{AFC}$, $V_{AFC}'$), die das Ausgangssignal der genannten Differenzerzeugungseinrichtung anzeigt, zu der spannungsgesteuerten Oszillatoreinrichtung.

2. Schaltung nach Anspruch 1, bei welcher die genannte spannungsgesteuerte Oszillatoreinrichtung umfaßt:

einen spannungsgesteuerten Oszillator (7) zur Erzeugung des ersten Signals; und

einen 90°-Phasenschieber (8), der mit dem Ausgang des genannten spannungsgesteuerten Oszillators zur Erzeugung des zweiten Generatorsignals verbunden ist.

3. Schaltung nach Anspruch 1 oder 2, bei welcher die genannte erste Steuereinrichtung umfaßt:

einen Verstärker (5) zum Empfang des genannten dritten oder vierten Signals; und

einen Tiefpaßfilter (6), der mit dem Ausgang des genannten Verstärkers zur Erzeugung der genannten ersten Steuerspannung ($V_{PLL}$) verbunden ist.

4. Schaltung nach Anspruch 1, 2 oder 3, bei welcher die genannte zweite Steuereinrichtung umfaßt:

einen Tiefpaßfilter (23) zum Empfang des Ausgangssignals der genannten Differenzerzeugungseinrichtung; und

einen Verstärker (24), der mit dem genannten Tiefpaßfilter zur Erzeugung der genannten zweiten Steuerspannung ($V_{AFC}$) verbunden ist.

5. Schaltung nach Anspruch 1, 2 oder 3, bei welcher die genannte zweite Steuereinrichtung umfaßt:

einen Tiefpaßfilter (23) zum Empfang des Ausgangssignals der genannten Differenzerzeugungsrichtung;

eine Bestimmungsschaltung (28), die mit dem genannten Tiefpaßfilter verbunden ist, zur Bestimmung, ob der Ausgangspegel des genannten Tiefpaßfilters innerhalb eines vorbestimmten Bereiches liegt oder nicht;

einen Einzelimpulsgenerator (29), der mit der genannten Bestimmungsschaltung verbunden ist, zur Erzeugung eines isolierten Impulses, wenn der Ausgangspegel des genannten Tiefpaßfilters von dem vorbestimmten Bereich abweicht, wobei der isolierte Impuls als die genannte zweite Steuerspannung ($V_{AFC}'$) dient.

6. Schaltung nach Anspruch 5, bei welcher der genannte isolierte Impuls eine Polarität hat, die davon abhängt, ob der Ausgangspegel des genannten Tiefpaßfilters von dem genannten vorbestimmten Bereich durch Überschreiten des oberen Pegels des vorbestimmten Bereiches oder durch Abfallen unter den unteren Pegel des vorbestimmten Bereiches abweicht.

## Revendications

1. Circuit de régénération de porteuse, destiné à être utilisé dans un démodulateur pour signal modulé PSK à $2^n$ phases (n=1,2,...), comprenant:

un moyen oscillateur commandé par tension (7, 8) servant à produire un premier et un deuxième signal en quadrature de phase;

un premier et un deuxième moyen de mélange (2, 3) servant à respectivement mélanger ledit signal modulé PSK avec lesdits premier et deuxième signaux;

un moyen (4) de traitement de bande de base servant à multiplier les signaux de sortie desdits premier et deuxième moyens de mélange par un facteur $2^n$ afin de produire un troisième et un quatrième signal en quadrature de phase;

un premier et un deuxième moyen de dérivation (21, 25) servant à dériver lesdits troisième et quatrième signaux;

un troisième moyen de mélange (22) servant à mélanger le signal de sortie dudit premier moyen de dérivation avec ledit quatrième signal;

un quatrième moyen de mélange (26) servant à mélanger le signal de sortie dudit deuxième moyen de dérivation avec ledit troisième signal;

un moyen (27) générateur de différence servant à produire la différence entre les signaux de sortie desdits troisième et quatrième moyens de mélange;

un premier moyen de commande (5, 6) servant à délivrer une première tension de commande ($V_{PLL}$), indicative dudit troisième ou quatrième signal, audit moyen oscillateur à commande par tension; et

un deuxième moyen de commande (23, 24; 23, 28, 29) servant à délivrer une deuxième tension de commande ($V_{CAF}$, $V_{CAF}'$), indicative du signal de sortie dudit moyen générateur de différence, audit moyen oscillateur à commande par tension.

2. Circuit selon la revendication 1, où ledit moyen oscillateur à commande par tension comprend:

un oscillateur (7) à commande par tension servant à produire ledit premier signal; et

un déphaseur à 90° (8) connecté à la sortie dudit oscillateur à commande par tension afin de produire ledit deuxième signal.

3. Circuit selon la revendication 1 ou 2, où ledit premier moyen de commande comprend:

un amplificateur (5) servant à recevoir ledit troisième ou quatrième signal; et

un filtre passe-bas (6), connecté à la sortie dudit amplificateur, servant à produire ladite première tension de commande ($V_{PLL}$).

4. Circuit selon la revendication 1, 2 ou 3, où ledit deuxième moyen de commande comprend:

un filtre passe-bas (23) servant à recevoir le signal de sortie dudit moyen générateur de différence; et

un amplificateur (24), connecté audit filtre passe-bas, servant à produire ladite deuxième tension de commande ($V_{CAF}$).

5. Circuit selon la revendication 1, 2 ou 3, où ledit deuxième moyen de commande comprend:

un filtre passe-bas (23) servant à recevoir le signal de sortie dudit moyen générateur de différence;

un circuit de détermination (28), connecté audit filtre passe-bas, servant à déterminer si le niveau de sortie dudit filtre passe-bas se trouve ou non à l'intérieur d'un intervalle prédéterminé;

un générateur (29) d'impulsion isolée, connecté audit circuit de détermination, servant à produire une impulsion isolée lorsque le niveau de sortie dudit filtre passe-bas s'écarte dudit intervalle prédéterminé, ladite impulsion isolée servant de deuxième tension de commande ($V_{CAF}'$).

6. Circuit selon la revendication 5, où ladite impulsion isolée possède une polarité qui dépend de ce que le niveau de sortie dudit filtre passe-bas s'écarte dudit intervalle prédéterminé en dépassant le niveau supérieur dudit intervalle prédéterminé ou en tombant au-dessous du niveau inférieur dudit intervalle prédéterminé.

# Fig. I

$\cos(\omega_d \cdot t + \theta)$

$\sin 4(\omega_d \cdot t + \theta)$

$\sin(\omega_d \cdot t + \theta)$

BASEBAND PROCESSING CIRCUIT

$\omega_{in}$

$\omega_o$

Fig. 2

Fig. 3

0 072 241

Fig. 4

# *Fig. 5*

# *Fig. 6*

Fig. 7

Fig. 8

0 072 241

## Fig. 9

## Fig. 10

*Fig. I IA*

*Fig. I IB*

*Fig. I IC*

*Fig. I2A*

*Fig. I2B*

*Fig. I2C*